Europäisches Patentamt

European Patent Office

Office européen des brevets

(11) Publication number: **0 086 114**
**A1**

(12) # EUROPEAN PATENT APPLICATION

(21) Application number: 83300669.5

(51) Int. Cl.³: **H 02 P 7/00**
**H 02 P 5/40**

(22) Date of filing: 10.02.83

(30) Priority: 10.02.82 JP 20247/82
10.02.82 JP 20246/82
26.03.82 JP 49687/82

(43) Date of publication of application:
17.08.83 Bulletin 83/33

(84) Designated Contracting States:
CH DE GB LI NL

(71) Applicant: HITACHI KOKI CO., LTD.
6-2, Ohtemachi-2-chome
Chiyoda-ku, Tokyo(JP)

(72) Inventor: Shinohara, Shigeru
5-28, 1-chome Nagahori-cho
Katsuta-shi Ibaragi-ken(JP)

(72) Inventor: Suzuki, Shun
835-21, Takeda
Katsuta-shi Ibaragi-ken(JP)

(74) Representative: Hartley, David et al,
c/o Withers & Rogers 4 Dyer's Buildings Holborn
London, EC1N 2JT(GB)

(54) Electrical tool having speed control circuit.

(57) An electrical tool, such as an electrical drill, is controlled by a microcomputer (8) so that the rotational speed of the electrical motor (3) thereof is set to an optimum value in view of data necessary for determining the speed. In order to input such data, a keyboard (7) is provided. An operator may give the computer various information, such as the diameter of the drill, the material of the workpiece to be machined etc via the keyboard. An optimum motor speed will be found from a data map prestored in a memory, and this optimum speed will be compared with an actual speed measured by a speed sensor (6) so that a voltage control circuit (4) supplying the motor with power is controlled by the result of the comparison for adjusting the motor speed. In one embodiment, two-speed reduction gear mechanism (20) is employed, and an optimum gear ratio is found by the computer. The gear ratio or position is sensed so that an alarm signal is produced when the gear ratio is not optimum. In another embodiment, a gear ratio changing actuator is used for automatically setting the gear ratio to the optimum one. A display (73) may be used to visually show sensed motor speed and other information. Not only the motor speed but also the drill speed may be obtained and displayed on the basis of gear ratio sensed.

FIG._5

- 1 -

DESCRIPTION

"ELECTRICAL TOOL HAVING SPEED CONTROL CIRCUIT"

This invention relates generally to electrical tools, such as electric drills, electric planers, disc grinders, circular saws, routers, or the like which are used to machine a workpiece of various materials, such as wood, metals, stones or the like. More particularly, the present invention relates to speed and gear ratio control in such electrical tools.

In some electrical tools, the rotational speed of the electrical motor can be controlled so that a desired output torque can be obtained. In order that the rotational speed of a working element, such as a drill of an electrical drill, rotates at a speed suitable for a material of a workpiece and the diameter of the working element, some electrical tools have a variable speed reduction gear mechanism so that a most suitable gear ratio can be selected. The speed control and selection of a gear ratio, however, has hitherto been effected manually. Namely, an adjusting knob of a variable resistor is manipulated to set a desired motor speed, and a desired gear ratio is also manually set by means of another knob. To this end a table showing suitable motor speed and gear ratio which are determined by required load, is used. For instance, in the case of an electrical drill, the material of workpieces and the diameter of the drill to be used, are used to determine the motor speed. Otherwise, suitable motor speed and gear ratio are respectively set based on experience. Therefore, it has been time consuming and troublesome to find and set optimum motor speed and gear ratio when using such conventional electrical tools.

The present invention has been developed in order to remove the above-described drawbacks inherent to the conventional electrical tools.

It is, therefore, an object of the present invention to provide a new and useful electrical tool which can be operated at a desired speed, while a suitable gear ratio can be readily found.

According to a feature of the present invention various data necessary for determining the motor speed and reduction gear ratio is input so that optimum motor speed and gear ratio are respectively found. Thus, the rotational speed of the motor is automatically controlled to reach the optimum speed, while information relating to the optimum gear ratio will be used so that the gear ratio is set to the optimum value either manually or automatically.

In accordance with the present invention there is provided an electrical tool comprising: an electrical motor for driving a working element; a rotational speed sensor for producing a signal indicative of the rotational speed of the electrical motor; first means for manually inputting data necesary for determining the rotational speed of the electrical motor; computing means having a memory and a processor, for selecting an optimum rotational speed of the electrical motor in accordance with the data from the first means; and second means responsive to the rotational speed from the rotational speed sensor and to the optimum rotational speed from the computing means for causing the electrical motor to rotate at the optimum rotational speed.

In accordance with the present invention there is also provided an electrical tool comprising: an electrical motor for driving a working element; a reduction gear mechanism interposed between the elelctric motor and a rotary shaft to which the working element is to be attached, the reduction gear mechanism being arranged such that one of at least two speeds is selected by changing gear ratio; a gear ratio sensor for producing a signal indicative of selected gear ratio of the reduction gear mechanism; a rotational speed sensor for producing a pulse train signal indicative of the rotational speed of the electrical motor; computing means having a memory and a processor, for counting the number of pulses from the rotational speed sensor for a predetermined period of time which is variable depending on the detected gear ratio; and display means responsive to the counted value from the computing means for displaying the rotational speed of the working element.

In accordance with the present invention there is further provided an electrical tool comprising: an electrical motor for driving a working element; a reduction gear mechanism interposed between the elelctric motor and a rotary shaft to which the working element is to be attached, for reducing the rotational speed of the working element at a predetermined gear ratio; a rotational speed sensor for producing a pulse train signal indicative of the rotational speed of the electrical motor; computing means having a memory and a processor, for counting the number of pulses from the rotational speed sensor for a predetermined period of time which is determined by the predetermined gear ratio of the reduction gear mechanism; and display means responsive to the counted value from the computing means for displaying the rotational speed of the working element.

In accordance with the present invention there is further provided an electrical tool comprising: an electrical motor for driving a working element; a reduction gear mechanism interposed between the elelctric motor and a rotary shaft to which the working element is to be attached, the reduction gear mechanism being arranged such that one of at least two speeds is selected by changing gear ratio; a gear ratio sensor for producing a signal indicative of selected gear ratio of the reduction gear mechanism; a rotational speed sensor for producing a pulse train signal indicative of the rotational speed of the electrical motor; first means for manually inputting data necesary for determining the rotational speed of the electrical motor and the gear ratio of the reduction gear mechanism; computing means having a memory and a processor, for selecting an optimum rotational speed of the electrical motor and an optimum gear ratio of the reduction gear mechanism in accordance with the data from the first means, the computing means counting the number of pulses from the rotational speed sensor for a predetermined period of time which is variable depending on the detected gear ratio; and second means responsive to the rotational speed from the rotational speed sensor and to the optimum rotational speed from the computing means for causing the electrical motor to rotate at the optimum rotational speed; third means for changing the gear ratio of the reduction gear mechanism in accordance with the optimum gear ratio from the computing means; and display means responsive to the counted value from the computing means for displaying the rotational

- 6 -

speed of the working element.

The object and features of the present invention will become more readily apparent from the following detailed description of the preferred embodiments taken in conjunction with the accompanying drawings in which:

Fig. 1A is a schematic partially cross-sectional side view of an electrical tool according to the present invention;

Fig. 1B is a schematic side view of a speed reduction gear mechanism included in the electrical tool of Fig. 1A;

Fig. 2 is a schematic block diagram of an embodiment of the electrical tool of Fig. 1A;

Fig. 3 is a flowchart showing the operation executed by a microcomputer included in the block diagram of Fig. 2;

Fig. 4 is another flowchart showing the operation of the microcomputer for deriving the rotational speed of the working element on the basis of the rotational speed of the motor and reduction gear ratio;

Fig. 5 is a schematic block diagram of another embodiment of the electrical tool according to the present invention; and

Fig. 6 is a flowchart showing the operation of the microcomputer in the embodiment of Fig. 5.

The same or corresponding elements and parts are designated at like reference numerals throughout the drawings.

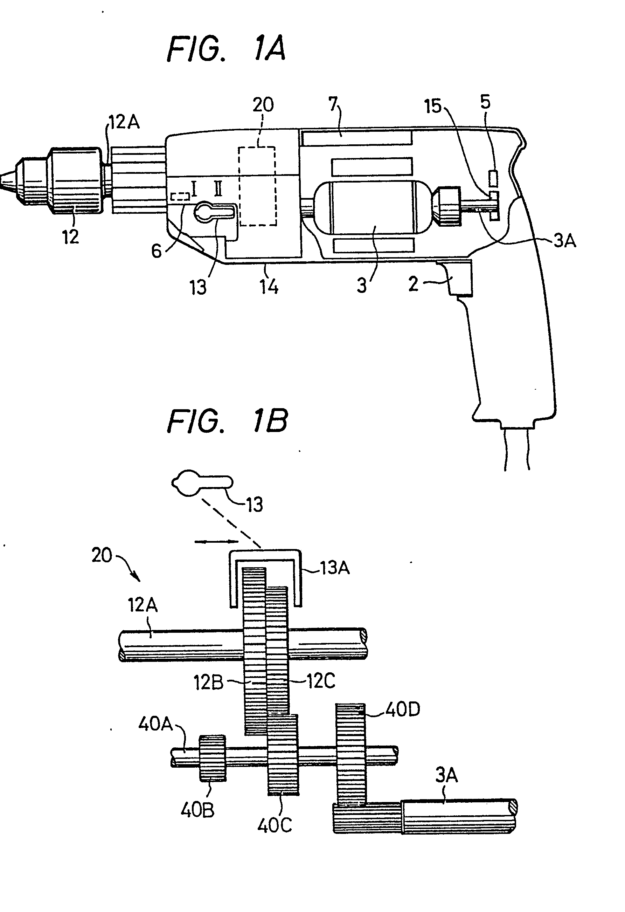

Referring now to Fig. 1A, a schematic partially cross-sectional side view of an electrical drill is shown. Although the present invention may be adapted to various electrical tools, such as electrical drills, electrical planers, disc grinders circular saws, routers, or the like, the present invention will be described with reference to embodiments of electrical drills. The electrical drill comprises generally an electrical motor 3, a casing 14 and a drill chuck 12. A rotary shaft of the electrical motor 3 is connected via a reduction gear mechanism 20 to the drill chuck 12. The reduction gear mechanism 20 is arranged such that one of two speeds is manually selected by manipulating a knob 13 exposed outside the casing 14. The electrical motor 3 is a well known series commutator motor, and is arranged to be supplied with A.C. power via a voltage control circuit 4 so that the rotational speed of the motor 3 can be controlled. The reference 2 designates a trigger switch mounted on a grip portion of the casing 14. This switch 2 is used to manually control the energization of the electrical motor 3 as is well known.

A rotational speed sensor 6 is provided to face a permanent magnet piece 15 attached to the rotary shaft of the electrical motor 3 so as to develop an output signal indicative of the rotational speed. The rotational speed sensor 6 may comprise a Hall generator or a magnetosensitive sensor responsive to change in magnetic flux. Such rotational speed sensors per se are well known, and therefore further description is omitted. A gear ratio or position sensor 5 is provided to produce an output signal indicative of the gear ratio or position of the speed reduction gear mechanism 20. In detail, the gear ratio sensor 5 comprises a microswitch which is arranged to turn on when the gear is in a position I in which lower gear ratio is obtained. Since the illustrated example of the reduction gear mechanism 20 is of two-speed type, such a simple on-off switch may be used as a gear ratio sensor or detecting means. However, when a reduction gear mechanism of more speeds is used, a sensor which produces different output signals depending on the gear position, will be necessary.

The electrical drill of Fig. 1A further comprises a keyboard 7 at the top portion of the casing 14. This keyboard 7 comprises various keys for manually inputing necesary data, and a display for showing the rotational speed of the electrical motor 3 and other information as will be described later.

Fig. 1B shows the above-mentioned reduction gear mechanism 20. The mechanism 20 comprises a larger diameter gear 12B and a smaller diameter gear 12C both arranged to rotate with the shaft 12A connected to the drill chuck 12. These two gears 12B and 12C are slidabe along the axis of the shaft 12A, and the knob 13 is operatively connected to a u-shaped member 13A which causes the gears 12B and 12C to slide leftward and rightward when the knob 13 is manipulated. Another shaft 40A is provided between the shaft 12A and the motor shaft 3A. This shaft 40A has three gears 40B, 40C and 40D fixed thereto, and the first gear 40B is engageable with the larger diameter gear 12B when the gear 12B is in position I providing lower drill speed. Another gear 40C is shown to be engaged with the smaller diameter gear 12C to show the gear position II providing higher drill speed. A further gear 40D is engaged with a geared tip portion of the motor shaft 3A. From the above it will be understood that the rotational force from the rotary shaft 3A of the electrical motor 3 is transmitted via the reduction gear mechanism 20 at one of first and second gear ratios which is manually selected by the knob 13.

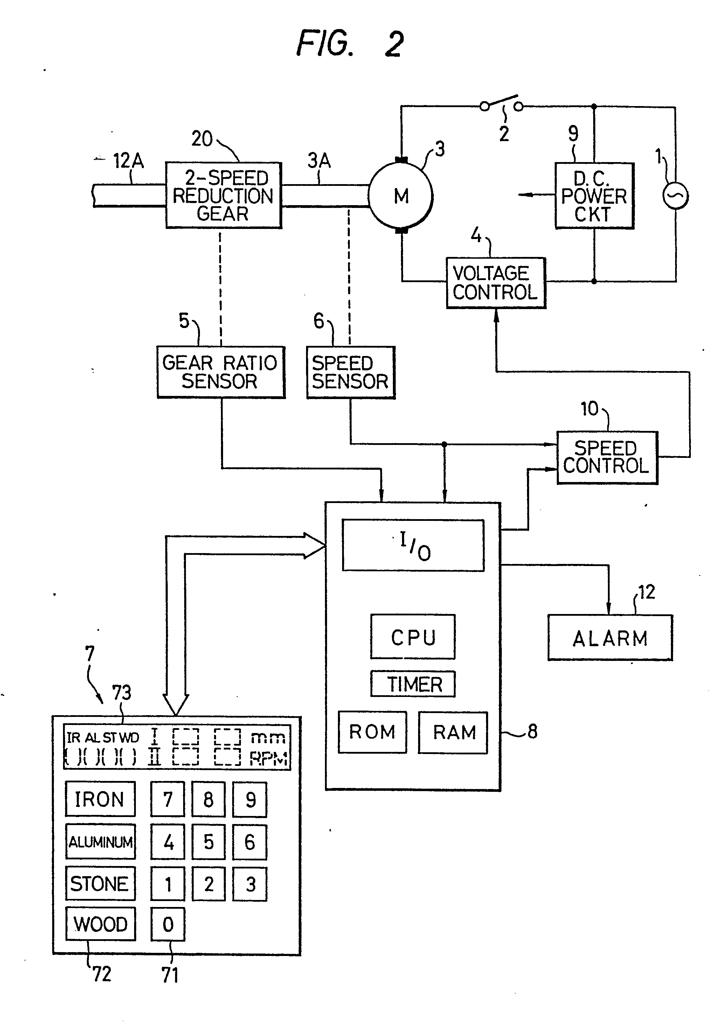

Reference is now made to Fig. 2 showing a schematic block diagram of the electrical drill of Fig. 1A. The reference 1 designates an external A.C. power source, and the electrical motor 3 is arranged to receive A.C. power when the trigger switch 2 is closed. The voltage control circuit 4 interposed between the electrical motor 3 and the power source 1 will be controlled by a signal applied thereto so as to change the voltage fed to the motor 3, resulting in the change in the rotational speed. D.C. power supply circuit 9 is provided to produce D.C. power from the A.C. power so that various circuits which will be described hereinbelow will receive a regulated D.C. voltage.

The circuitry of Fig. 2 comprises a microcomputer 8 which functions as a computing or control means. The microcomputer 8 per se is of well known conventional type, and comprises a central processing unit (CPU), a random-access memory (RAM), a read-only memory (ROM), and an input/output device (I/O). A predetermined program is stored in the ROM so that the CPU executes the program accordingly to produce necessary output signals. It is to be noted that the D.C. power supply 9 is arranged to produce D.C. voltage irrespective of the position of the trigger switch 2 so that the microcomputer 8 and other circuits other than the above-mentioned A.C. driven devices are supplied with D.C. voltage all the time.

The keyboard 7 comprises a first group of switches 71 including ten-keys for inputing figures of 0 through 9, a second group of switches 72 including four keys for selecting the material of a workpiece to be machined. In the illustrated embodiment, these four keys 72 are used to select one from "iron", "aluminum", "stone", and "wood". The ten-keys 71 are used to input data relating to the diameter of a working element, i.e. a drill in the illustrated example. In the case of other electrical tools, other data relating to required load may be inputed. For instance, in the case of an electrical planer, the cutting depth to be cut off by the planer blade may be used. The keyboard 7 further comprises a dislplay portion 73 which indicates selected material, selected drill diameter, sensed gear ratio or position, and measured rotational speed of the electrical motor 3. The display portion 73 comprises a liquid crystal display, LED display or the like of seven-segment type. The keyboard 7 is electricalally connected to the microcomputer 8 so that input data is fed to the microcomputer 8 and necessary information is given from the microcomputer 8 to the display portion 73.

A speed contorl circuit 10 is provided for producing a pulse train signal applied to the voltage control circuit 4 which comprises a semiconductor control element, such as a Triac (trademark). The firing angle of the Triac will be controlled by the pulse signal so that the voltage of A.C.

- 12 -

power applied to the electrical motor 3 is adjusted as is well known. Such a speed control circuit or unit is disclosed in United Kingdom Patent No. 1,356,858. The speed control circuit 10 is responsive to a signal indicative of measured rotational speed from the rotational speed sensor 6, and to another signal indicative of a setting or reference speed from the microcomputer 8. Namely, the constant-speed control circuit 10 produces the above-mentioned pulse signal on the basis of the difference between the actual speed and the setting speed.

An alarm 12 is shown to be connected to the microcomputer 8. This alarm 12 is employed to alarm the operator or user that the gear ratio of the reduction gear mechanism 20 is different from a desired one in view of input data. The alarm 12 may comprise a buzzer, an LED or the like. However, such an alarm 12 may be replaced with the display portion 73 of the keyboard 7 with gear ratio indicating portion (see symbols I and II) being flushed.

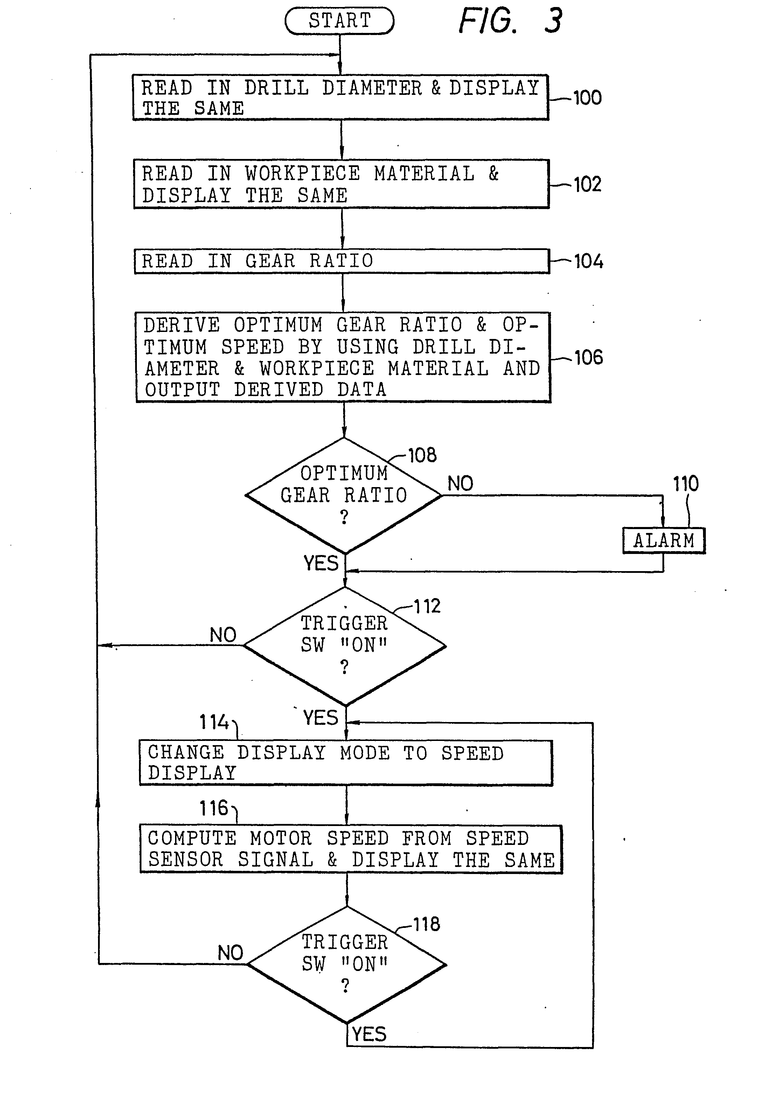

The electrical drill of Figs. 1 and 2 operates as follows. The operation will be described with reference to a flowchart of Fig. 3 which shows a main routine of the program of the CPU of the microcomputer 8. Prior to turning on the trigger switch 2 for energizing the electrical motor 3, the keyboard 7 is manipulated to input necessary data. Namely, the first and second groups of switches 71 and 72 are manipulated to designate a given diameter of the drill to be used and the material of the workpiece to be drilled. As soon as these data are input, they are stored in the RAM and displayed at the display portion 73 at steps 100 and 102 so that the operator can confirm the input data. Then the CPU reads the output signal from the microswitch or gear ratio sensor 5 so detect the gear ratio or position at a step 104. The CPU then finds an optimum gear ratio and optimum rotational speed of the electrical motor 3 from the data of the drill diameter and the workpiece material. In detail, values of gear ratio and rotational speed suitable for various combinations of drill diameter and workpiece material are prestored in the ROM in the form of a map so that desired values therefor can be derived or picked up with the data of drill diameter and workpiece material input. In the illustrated flowchart, although the step 104 is executed prior to the step 106, the order of these steps 104 and 106 may be reversed because the step 106 can be executed when the steps 100 and 102 have been completed. In a following step 108, it is checked to see whether the sensed gear ratio is optimum or not by using the result of the step 106. If no, a step 110 takes place to energize the alarm 12 to alart the operator. Namely, the operator will be advised that the gear ratio is undesired so that it has to be changed. On the other hand, if the answer of the step 108 is YES, a step 112 is executed in which it is checked to see whether the trigger switch 2 has been turned on or depressed. If no, the operational flow returns to the first step 100, and therefore, the above steps between 100 and 112 are repeatedly executed until the trigger switch 2 is turned on.

When the trigger switch 2 is turned on, then a step 114 is executed so that drill diamter display mode is changed to rotational speed display mode. Then in a following step 116, the output signal from the rotational speed sensor 6 is processed to calculate the rotational speed expressed in terms of r.p.m. Therefore, the measured rotational speed will be displayed. A step 118 is executed to see whether the trigger switch 2 is still in on-state or not. As long as the trigger switch 2 is in on-state, the steps 114, 116 and 118 are repeatedly executed. On the other hand, when the trigger switch 2 is turned off, the operational flow returns to the first step 100.

In the above-described embodiment, the rotational speed of the electrical motor 3 is displayed on the display portion 73. However, it is sometimes convenient if the rotational speed of the working element, i.e. the drill, is displayed in place of the speed of the motor 3 because the drill speed changes depending on the reduction gear ratio even the motor speed is maintained constant.

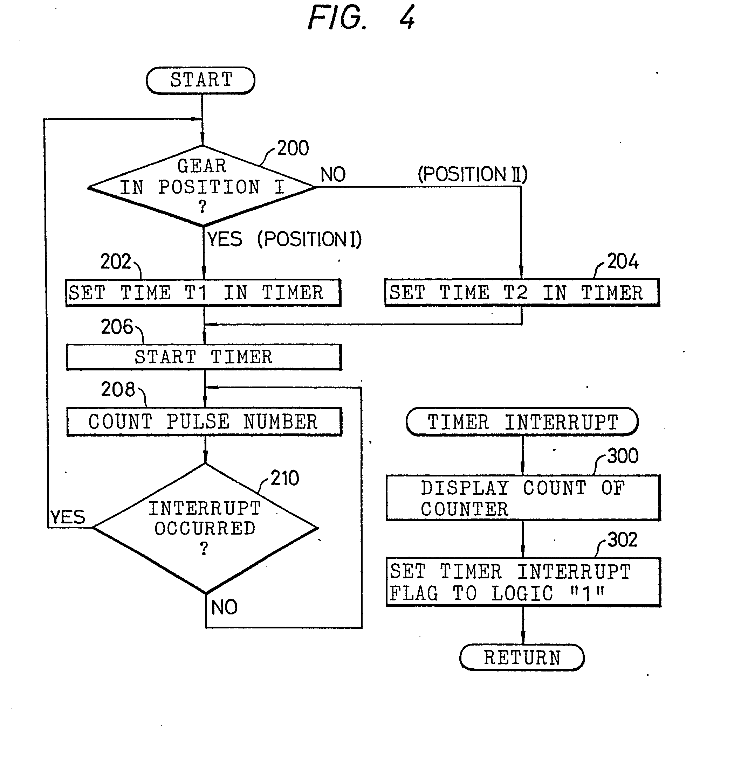

Fig. 4 illustrates a flowchart showing steps for obtaining actual drill rotational speed on the basis of the rotational speed of the electrical motor 3 and the selected gear ratio. The steps of Fig. 4 , therefore, may be used in place of the step 116 of Fig. 3. However, when automatic speed control is not intended, the steps of Fig. 4 may be used to only display the drill speed. In this case, a user may manually adjust the motor speed and the gear ratio if necessary by watching drill speed information displayed. In a first step 200, it is detected to see whether the gear position is at lower position I or higher position II. If the gear position is in I, a step 202 is executed in which a first predetermined period of time T1 is set in a timer included in the microcomputer 8. This timer is arranged to count the number of clock pulses generated in the microcomputer 8 for such a predetermined period of time, and when the count reaches a predetermined number corresponding to the predetermined period of time, a timer interrupt request will be produced so that an interruput service routine also shown in Fig. 4 is executed by intrrupting the main routine as will be described later.

On the other hand, if the gear position is in II, a second predetermined period of time T2 is set in the timer. Then in a following step 206, the timer is started to measure the lapse of time. As soon as the timer has started, the number of pulses from the rotational speed sensor 6 is counted in a step 208. In detail, the precence of the pulse from the rotational speed sensor 6 is detected periodically, and whenever a pulse is detected, a variale stored in the RAM is added by one. Namely, counting is effected by the program of the microcomputer 8.

The above-mentioned first and second predetermined periods of time T1 and T2 may be selected in view of the minimum rotational speed of the drill and the respective reduction gear ratios. Assuming that the minimum rotational speed of the drill is expressed in terms of $N_{min}$, and the gear ratio, by R, the first and second predetermined periods T1 and T2 should be longer than T given by:

$$T = \frac{1}{\frac{N_{min}}{60} \times R \times 1 \text{ (pulse/revolution)}}$$

From the above equation, if $N_{min}$ is 100(rpm), and R is 10, T equals 0.06 seconds. Therefore, the number of pulses counted during this period of time T will be used to indicate the rotational speed of the drill, i.e. the reduced speed. Assuming that the pulse count is expressed by C, C X 100 rpm represents the rotational speed in rpm of the drill. The first and second predetermined periods T1

- 17 -

and T2 are set to be an integral multiple of the above-mentioned time T so that a plurality of pulses are counted for accurate detection. Suppose T1 or T2 equals kT wherein k is greater than 1, the number C' of pulses counted in this period of time kT is used to derive the rotational speed of the drill as follows:

$$N = \frac{C'}{k} \times 100 \text{ rpm}$$

Turning back to Fig. 4, it is checked to see whether timer interrupt has occurred in a step 210 because the aforementioned interrupt request is arranged to be produced when the first or second predetermined period of time T1 or T2 has been elapsed. In other words, the timer produces a timer interrupt request to interrupt the main routine for executing an interrupt serivice routine also shown at the right side in Fig. 4. In this interrupt service routine at a first step 300, the count C' of the counter indicative of the number of pulses from the rotational speed sensor 6 is processed to derive the rotational speed N of the drill in accordance with the above equation, and this speed N is displayed at the display portion 73. Then a flag indicative of timer interrupt is set to logic "1" in a step 302 before returning to the main routine. In the step 210, therefore, this flag is detected to see whether timer interrupt has occurred. If the answer of the step 210 is YES, the operational flow returns to the step 200. On the other hand, if the answer is NO, the step 208 is again executed repeatedly until the predetetermined period of time T1 or T2 has elapsed.

Although the embodiment of Fig. 4 is directed to an electrical tool having a multi-speed reduction gear mechanism, the method shown in Fig. 4 may be adapted to an electrical tool having a single-speed reduction gear mechanism. Namely, in the case that the gear ratio is fixed, there is no need to check the gear position as in the step 200, and therefore the steps 200 and 204 are not necessary. A predetermined time defined by the fixed gear ratio is then set in the timer in the step 202. Therefore, in such a case of fixed gear ratio, the rotational speed of the working element will be obtained in view of the rotational speed of the electrical motor 3 and the fixed gear ratio, and then the obtained speed will be displayed.

In the above-described embodiments, although, the rotational speed of the motor 3 is automatically controlled so that the speed reaches an optimum speed derived in view of the drill diameter and the workpiece material, the gear ratio has to be changed manually if necessary. The gear ratio or position change, however, may be automatically effected by providing an actuator.

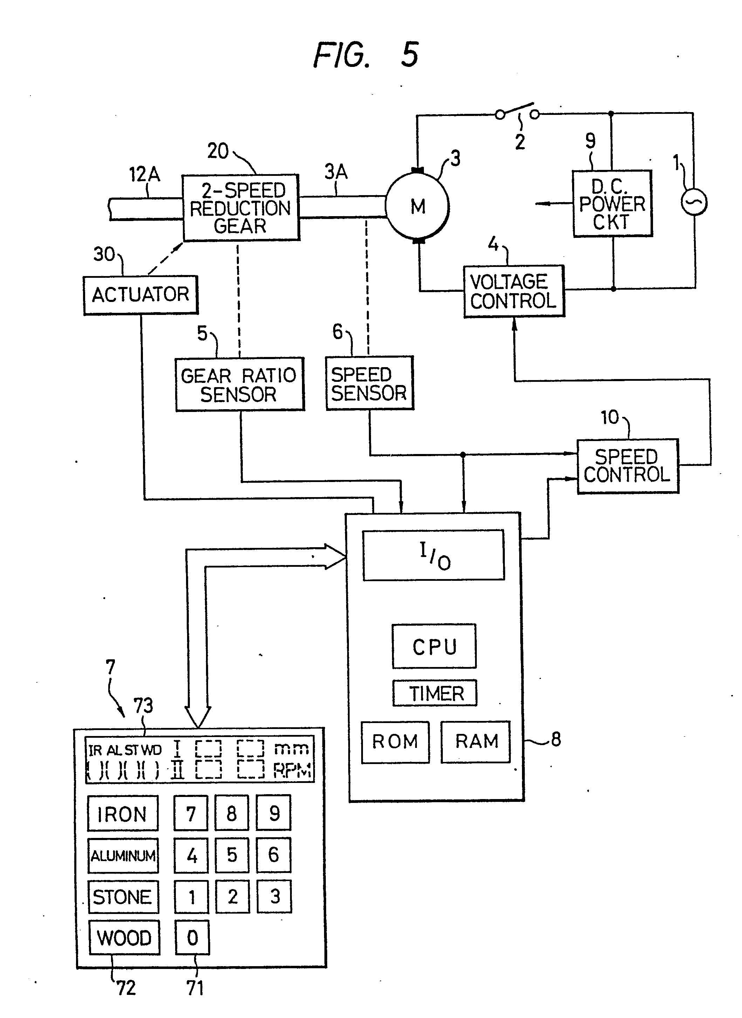

Hence, reference is now made to Fig. 5, which shows another embodiment of the electrical tool according to the present invention. This embodiment differs from the above-described embodiment of Fig. 2 in that a gear ratio changing actuator 30 is additionally provided. This actuator 30 may comprise an electromagnetic actuator, such as an electromagnetic clutch or electromagnetic plunger, which is operatively acting on the reduction gear mechanism 20. In detail, the actuator 30 may be arranged to drive the U-shaped member 13A of Fig. 1B so as to select one of the gear positions I and II. The actuator 30 receives a command signal from the microcomputer 8 so as to change the position of the gear when necessary. In this embodiment, since the gear ratio is automatically set as described in the above, the alarm 12 of Fig. 2 is unnecessary. Furthemore, since gear ratio selection is automatically effected, the knob 13 shown in Fig. 1A may be omitted.

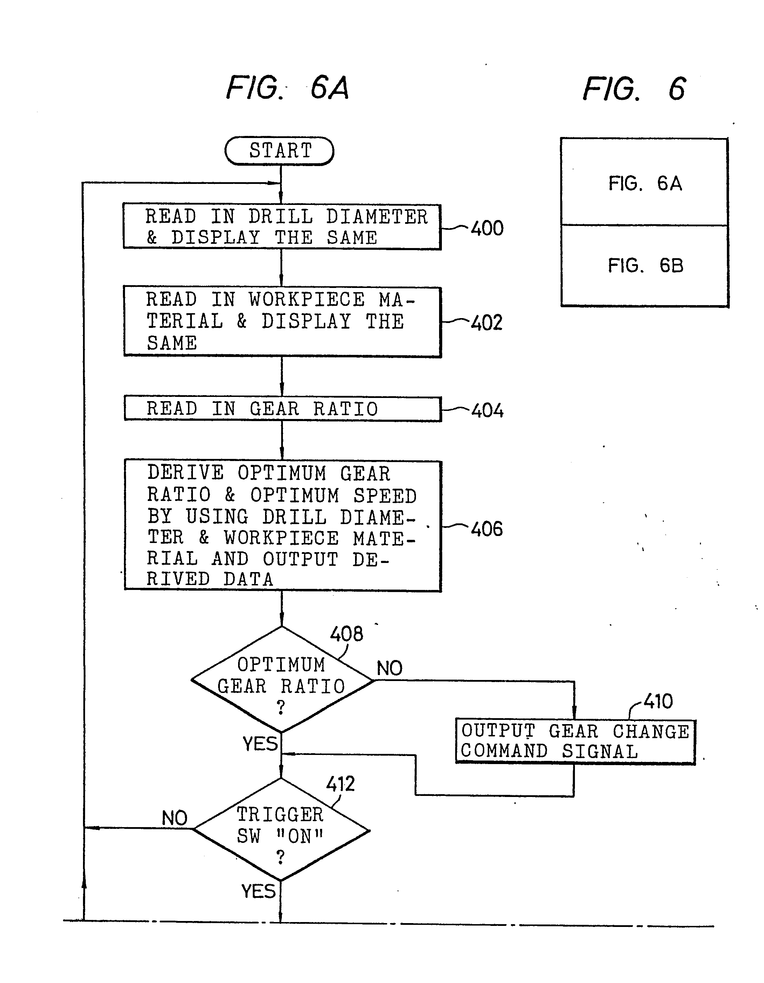

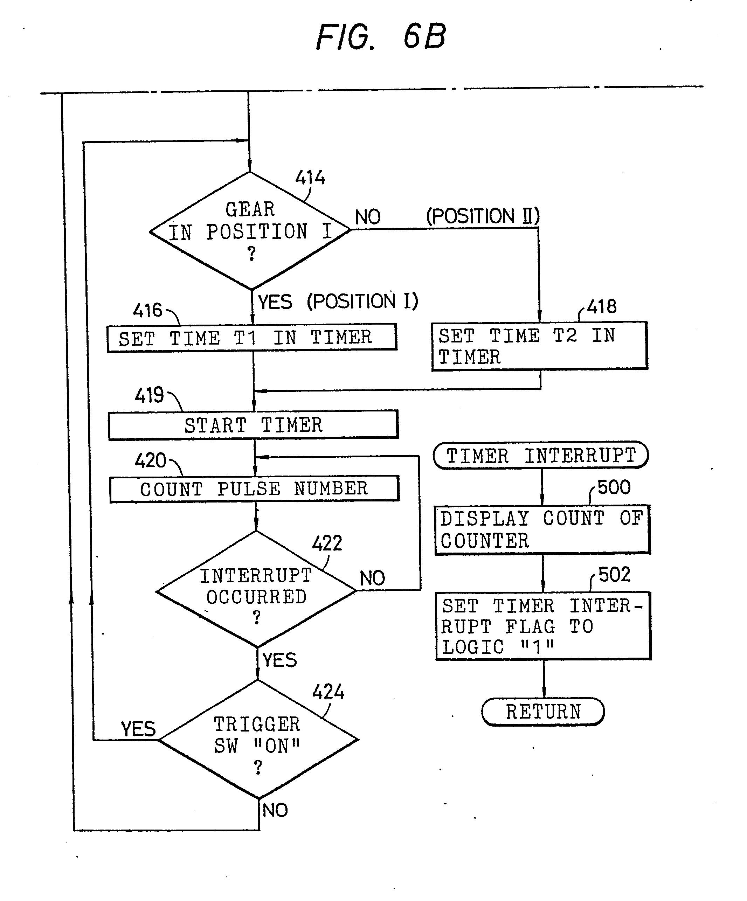

Referring now to Fig. 6, a flowchart for the operation of the microcomputer 8 of Fig. 5 is shown. The flowchart shows a main routine including steps 400 through 424 and an interrupt service routine including steps 500 and 502. It will be understood that the steps from 400 to 412 are the same as the steps 100 to 112 of Fig. 3 expect that the step 110 for alarming is replaced by the step 410 in which gear change command signal is produced. Namely, in the embodiment of Fig. 5 since gear change is automatically effected in the step 410 and therefore, it is unnecessary to producing an alarm signal. The following steps 414 to 422 are the same as the steps 200 to 210 of Fig. 4 while the interrupt service routine including the steps 500 and 502 is substantially the same as that of Fig. 4 so that the rotational speed of the drill is detected in view of the rotational speed of the electrical motor 3 and the reduction gear ratio in the same manner as in Fig. 3 to display the same.

The above-described embodiments are just examples of the present invention, and therefore, it will be apparent for those skilled in the art that many modifications and variations may be made without departing from the spirit of the present invention.

CLAIMS


1.    An electrical tool comprising:

(a)   an electrical motor for driving a working element;

(b)   a rotational speed sensor for producing a signal indicative of the rotational speed of said electrical motor;

(c)   first means for manually inputting data necesary for determining the rotational speed of said electrical motor;

(d)   computing means having a memory and a processor, for selecting an optimum rotational speed of said electrical motor in accordance with said data from said first means; and

(e)   second means responsive to said rotational speed from said rotational speed sensor and to said optimum rotational speed from said computing means for causing said electrical motor to rotate at said optimum rotational speed.


2.    An electrical tool as claimed in Claim 1, further comprising;

(a)   a reduction gear mechanism interposed between said elelctric motor and a rotary shaft to which said working element is to be attached, said reduction gear mechanism being arranged such that one of at least two speeds is selected by changing gear ratio;

(b) a gear ratio sensor for producing a signal indicative of selected gear ratio of said reduction gear mechanism;

the output signal from said gear ratio sensor being fed to said computing means so that said computing means detects whether the gear ratio is optimum in view of said optimum rotational speed.

3. An electrical tool as claimed in Claim 1, wherein said first means comprises;

(a) means for manually inputting data of the diameter of said working element; and

(b) means for manually inputting data relating to the material of a work piece to be machined.

4. An electrical tool as claimed in Claim 2, wherein said gear ratio sensor comprises a microswitch arranged to be turned on when a particular gear is in operable condition.

5. An electrical tool as claimed in Claim 1, wherein said first means comprises a keyboard.

6. An electrical tool as claimed in Claim 2, further comprising means for changing the gear ratio of said reduction gear mechanism in response to an output signal from said computing means.

7. An electrical tool as claimed in Claim 1, further comprising means for displaying said data inputted from said first means.

8. An electrical tool as claimed in Claim 1, further comprising means for displaying data relating to said rotational speed of said electrical motor.

9. An electrical tool as claimed in Claim 2, further comprising means for displaying data relating to said gear ratio and the rotational speed of said motor.

10. An electrical tool as claimed in Claim 2, further comprising means for alarming when the gear ratio of said reduction gear mechanism is different from said optimum gear ratio derived from said computing means.

11. An electrical tool comprising:

    (a) an electrical motor for driving a working element;

- 24 -

(b)   a reduction gear mechanism interposed between said elelctric motor and a rotary shaft to which said working element is to be attached, for reducing the rotational speed of said working element at a predetermined gear ratio;

(c)   a rotational speed sensor for producing a pulse train signal indicative of the rotational speed of said electrical motor;

(d)   computing means having a memory and a processor, for counting the number of pulses from said rotational speed sensor for a predetermined period of time which is determined by the predetermined gear ratio of said reduction gear mechanism; and

(e)   display means responsive to the counted value from said computing means for displaying the rotational speed of said working element.

12.   An electrical tool comprising:

(a)   an electrical motor for driving a working element;

(b)   a reduction gear mechanism interposed between said elelctric motor and a rotary shaft to which said working element is to be attached, said reduction gear mechanism being arranged such that one of at least two speeds is selected by changing gear ratio;

(c)   a gear ratio sensor for producing a signal indicative of selected gear ratio of said reduction gear mechanism;

(d)   a rotational speed sensor for producing a pulse train signal indicative of the rotational speed of said electrical motor;

(e)   computing means having a memory and a processor, for counting the number of pulses from said rotational speed sensor for a predetermined period of time which is variable depending on the detected gear ratio; and

(f)   display means responsive to the counted value from said computing means for displaying the rotational speed of said working element.

13.   An electrical tool comprising:

(a)   an electrical motor for driving a working element;

(b)   a reduction gear mechanism interposed between said elelctric motor and a rotary shaft to which said working element is to be attached, said reduction gear mechanism being arranged such that one of at least two speeds is selected by changing gear ratio;

(c)   a gear ratio sensor for producing a signal indicative of selected gear ratio of said reduction gear mechanism;

(d)   a rotational speed sensor for producing a pulse train signal indicative of the rotational speed of said electrical motor;

(e)   first means for manually inputting data necesary for determining the rotational speed of said electrical motor and the gear ratio of said reduction gear mechanism;

(f)   computing means having a memory and a processor, for selecting an optimum rotational speed of said electrical motor and an optimum gear ratio of said reduction gear mechanism in accordance with said data from said first means, said computing means counting the number of pulses from said rotational speed sensor for a predetermined period of time which is variable depending on the detected gear ratio; and

(g)   second means responsive to said rotational speed from said rotational speed sensor and to said optimum rotational speed from said computing means for causing said electrical motor to rotate at said optimum rotational speed;

(h)   third means for changing the gear ratio of said reduction gear mechanism in accordance with said.optimum gear ratio from said computing means; and

(i)   display means responsive to the counted value from said computing means for displaying the rotational speed of said working element.

14. An electrical tool as claimed in Claim 1, wherein said first means comprises;

(a) means for manually inputting data of the diameter of said working element; and

(b) means for manually inputting data relating to the material of a work piece to be machined.

## FIG. 1A

## FIG. 1B

## FIG. 2

0086114

FIG. 3

```
                    ( START )

┌─────────────────────────────────────┐
│ READ IN DRILL DIAMETER & DISPLAY     │──100
│ THE SAME                             │
└─────────────────────────────────────┘

┌─────────────────────────────────────┐
│ READ IN WORKPIECE MATERIAL &         │──102
│ DISPLAY THE SAME                     │
└─────────────────────────────────────┘

┌─────────────────────────────────────┐
│ READ IN GEAR RATIO                   │──104
└─────────────────────────────────────┘

┌─────────────────────────────────────┐
│ DERIVE OPTIMUM GEAR RATIO & OP-      │
│ TIMUM SPEED BY USING DRILL DI-       │──106
│ AMETER & WORKPIECE MATERIAL AND      │
│ OUTPUT DERIVED DATA                  │
└─────────────────────────────────────┘

              OPTIMUM          108
              GEAR RATIO  ──NO──────────┐
              ?                         │
                                   ┌─────────┐
              YES                  │ ALARM   │──110
                                   └─────────┘

    NO        TRIGGER          112
◄──────────   SW "ON"
              ?

              YES

┌─────────────────────────────────────┐
│ CHANGE DISPLAY MODE TO SPEED         │
│ DISPLAY                              │──114
└─────────────────────────────────────┘

┌─────────────────────────────────────┐
│ COMPUTE MOTOR SPEED FROM SPEED       │──116
│ SENSOR SIGNAL & DISPLAY THE SAME     │
└─────────────────────────────────────┘

    NO        TRIGGER          118
◄──────────   SW "ON"
              ?

              YES
```

4|7

## FIG. 4

```
                    ( START )
                        │
                        ▼
                   ╱────────╲      ⌐200
                  ╱   GEAR    ╲  NO        (POSITION Ⅱ)
                 ╱ IN POSITION Ⅰ ╲──────────────────────────┐
                 ╲      ?       ╱                           │
                  ╲            ╱                            │
                   ╲────────╱                               │
                        │ YES (POSITION Ⅰ)                  │
    202─┐               │                            204─┐  │
   ┌────────────────────────────┐          ┌──────────────────────────┐
   │ SET TIME T1 IN TIMER       │          │ SET TIME T2 IN TIMER     │
   └────────────────────────────┘          └──────────────────────────┘
    206─┐               │                            │
   ┌────────────────────────────┐◄────────────────────
   │      START TIMER           │
   └────────────────────────────┘
    208─┐               │
   ┌────────────────────────────┐                ( TIMER INTERRUPT )
   │  COUNT PULSE NUMBER        │                        │
   └────────────────────────────┘                        │       ⌐300
                        │                      ┌──────────────────────────┐
                        ▼                      │ DISPLAY COUNT OF         │
                   ╱────────╲   ⌐210           │ COUNTER                  │
          YES     ╱ INTERRUPT ╲                └──────────────────────────┘
        ◄────────╱  OCCURRED   ╲                        │       ⌐302
                 ╲     ?       ╱                ┌──────────────────────────┐
                  ╲          ╱                  │ SET TIMER INTERRUPT      │
                   ╲────────╱                   │ FLAG TO LOGIC "1"        │
                        │ NO                    └──────────────────────────┘
                                                        │
                                                  ( RETURN )
```

## FIG. 5

## FIG. 6A

```
        ( START )
            │
            ▼
┌─────────────────────────┐
│ READ IN DRILL DIAMETER  │──── 400
│ & DISPLAY THE SAME      │
└─────────────────────────┘
            │
            ▼
┌─────────────────────────┐
│ READ IN WORKPIECE MA-   │
│ TERIAL & DISPLAY THE    │──── 402
│ SAME                    │
└─────────────────────────┘
            │
            ▼
┌─────────────────────────┐
│ READ IN GEAR RATIO      │──── 404
└─────────────────────────┘
            │
            ▼
┌─────────────────────────┐
│ DERIVE OPTIMUM GEAR     │
│ RATIO & OPTIMUM SPEED   │
│ BY USING DRILL DIAME-   │──── 406
│ TER & WORKPIECE MATE-   │
│ RIAL AND OUTPUT DE-     │
│ RIVED DATA              │
└─────────────────────────┘
            │
            ▼
          ╱  ╲     408
        ╱      ╲
      ╱ OPTIMUM  ╲   NO
     ╱ GEAR RATIO ╲──────────────┐
      ╲    ?     ╱                │
        ╲      ╱                  ▼
          ╲  ╱            ┌──────────────────┐  410
          YES            │ OUTPUT GEAR CHANGE│
            │            │ COMMAND SIGNAL    │
            ▼            └──────────────────┘
          ╱  ╲   412            │
   NO   ╱      ╲                 │
 ◄─────╱ TRIGGER╲◄───────────────┘
        ╲ SW "ON"╱
          ╲  ?  ╱
            ╲ ╱
           YES
```

## FIG. 6

| FIG. 6A |
|---------|
| FIG. 6B |

## FIG. 6B

GEAR IN POSITION I ? — 414
NO — (POSITION II)
YES (POSITION I)

416 — SET TIME T1 IN TIMER
418 — SET TIME T2 IN TIMER

419 — START TIMER

420 — COUNT PULSE NUMBER

422 — INTERRUPT OCCURRED ?
NO
YES

424 — TRIGGER SW "ON" ?
YES
NO

TIMER INTERRUPT

500 — DISPLAY COUNT OF COUNTER

502 — SET TIMER INTER-RUPT FLAG TO LOGIC "1"

RETURN

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | WO-A-8 102 818  (BLACK & DECKER)  * Page 5, line 14 - page 7, line 6;  page 11,  line 29 - page 15, line 6; figures 1,4a,4b * | 1,2,4 9,11, 12 | H 02 P    7/00 H 02 P    5/40 |
| Y | US-A-4 090 116  (GENERAL ELECTRIC)  * Column   5, line 36 - column 6, line 20; figure 1 * | 1,11, 12 | |
| A | EP-A-0 033 161  (BLACK & DECKER)  * Page  2,  lines 9-36; page 13, line  34 - page 14, line 13; figures 4,5 * | 1,8,11 ,12 | |
| A | ELECTRONICS, vol. 52, no. 20, September 1979, pages 140-144, New York, USA T.  SLADE: "Microcomputer-based control  smoothes universal motor performance" * Page 140, line 1 - page  143, left-hand column, line 19 * | 1,5,7, 8,11, 12 | **TECHNICAL FIELDS SEARCHED (Int. Cl. ³)**  H 02 P    7/00 H 02 P    5/00 B 23 B   45/00 |

-/-

The present search report has been drawn up for all claims

| Place of search THE HAGUE | Date of completion of the search 18-05-1983 | Examiner WEIHS J.A. |
|---|---|---|

European Patent
Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | CONTROL AND INSTRUMENTATION, vol. 11, no. 7, 8th July 1979, pages 29-31, London, GB. P. NOBLE: "A multiprocessorsystem provides new approach to motor RPM control" * Page 29, middle column, line 17 - page 31, left-hand column, line 32; figures on pages 29,31 * | 1,11, 12 | |

-----

TECHNICAL FIELDS
SEARCHED (Int. Cl. ³)

The present search report has been drawn up for all claims

| Place of search | Date of completion of the search | Examiner |
|---|---|---|
| THE HAGUE | 18-05-1983 | WEIHS J.A. |